# EUROPÄISCHE PATENTANMELDUNG

(11) **EP 2 784 233 A1**
(43) Veröffentlichungstag der Anmeldung: **01.10.2014**
(21) Anmeldenummer: 14161491.7
(22) Anmeldetag: 25.03.2014
(51) Int. Cl.: E04B 1/86

(54) **Akustisches Paneel**

(30) Priorität: 25.03.2013 AT 502022013
(71) Anmelder: Organoid Technologies GmbH, 6473 Wenns (AT)
(72) Erfinder: Jehart, Martin, 6473 Wenns (AT); Egger, Christoph, 6473 Wenns (AT)
(74) Vertreter: Schwarz & Partner

(57) **Zusammenfassung**

Akustisches Paneel, umfassend eine Oberfläche mit einer Vielzahl an Erhebungen und Vertiefungen zur Absorption und Diffusion von Schallwellen, die auf die Oberfläche treffen, wobei die Erhebungen und Vertiefungen konkave und/oder konvexe Krümmungen aufweisen, wobei das Paneel zumindest an der Oberfläche ein ausgehärtetes Bindemittel und ein darin verteiltes partikelförmiges Füllmaterial aufweist, wobei das Füllmaterial biogenen Ursprungs ist.

## Beschreibung

Die Erfindung betrifft ein akustisches Paneel, umfassend eine Oberfläche mit Erhebungen und Vertiefungen zur Absorption und Diffusion von Schallwellen, die auf die Oberfläche treffen, wobei die Erhebungen und Vertiefungen konkave und/oder konvexe Krümmungen aufweisen, wobei das Paneel ein ausgehärtetes Bindemittel aufweist. Weiters betrifft die Erfindung ein Verfahren zur Herstellung eines solchen Paneels.

In jüngster Zeit werden Faktoren wie Lärm und Geräusche in Räumen vermehrt als störend wahrgenommen. Diesen wird durch verstärkte akustische Raumlösungen begegnet. Allerdings ist das Erstellen von räumlich gekrümmten, bzw. drei dimensionalen Platten als akustisch wirksamen Schalungsformen bzw. akustisch wirksamen Platten mit einer dreidimensionalen Oberfläche konstruktiv aufwändiger und teurer als die Verwendung von planebenen akustisch wirksamen Elementen.

Aus dem Stand der Technik sind verschiedene akustische Paneele zur Absorption und Diffusion von Schallwellen bekannt. In der Regel werden solche Paneele hergestellt, indem auf einem plattenförmigen Gebilde eine Oberfläche mit Erhebungen und Vertiefungen erzeugt wird. Diese können zum Beispiel mittels CNC Fräse eingearbeitet werden. Auch ist es bekannt, auf plattenförmige Gebilde, Vliese und Matten z.B. aus Naturfasern, Mineral-und Steinwolle, Kunststoffen, Textilien usw. aufzubringen, die als Wand- oder Deckenpaneel oft auch mit einem Rahmen und Filz kaschiert werden. Akustische Paneele sind z.B. aus US 7,721,847 B2, US 6,209,680B1, EP 2 295 240A1, EP 2 216 773 A1, EP 0 750 078 A1, EP 0 652 331 B1 oder EP 0 524 566 A bekannt. In diesen beschriebenen Lösungen handelt es sich um planebene Platten.

Bei den aus dem Stand der Technik bekannten Lösungen ist es sehr aufwendig, die sichtbaren Oberflächen mit einer Oberflächenstruktur mit unterschiedlichen Erhebungen und Vertiefungen zu realisieren, mit denen ein hoher Schallabsorptionsgrad erzielbar ist. Weiterhin ist das Erstellen von räumlich gekrümmten, bzw. dreidimensionalen Platten als akustisch wirksamen Schalungsformen bzw. akustisch wirksamen Platten mit einer dreidimensionalen Oberfläche konstruktiv aufwändiger und teurer als die Verwendung von planebenen akustisch wirksamen Elementen.

Daher haben sich die Erfinder in der gegenständlichen Erfindung die Aufgabe gestellt, hier Abhilfe zu schaffen und ein leicht herstellbares Paneel bereitzustellen. Insbesondere soll mit dem erfindungsgemäßen Verfahren ermöglicht werden, ein beliebig geformtes Paneel mit einer akustisch wirksamen Oberfläche einfach und kostengünstig herzustellen.

Gelöst wird diese Aufgabe durch ein Verfahren zur Herstellung eines akustischen Paneels umfassend eine Oberfläche mit - vorzugsweise einer Vielzahl an - Erhebungen und Vertiefungen zur Absorption und Diffusion von Schallwellen, die auf die Oberfläche treffen, wobei die Erhebungen und Vertiefungen konkave und/oder konvexe Krümmungen aufweisen, wobei das Paneel ein ausgehärtetes Bindemittel und ein darin verteiltes partikelförmiges Füllmaterial aufweist, wobei das Füllmaterial biogenen Ursprungs ist, welches die Schritte umfasst:
(a) Bereitstellen und Vermischen eines partikelförmigen, überwiegend biogenen Füllmaterials sowie eines Bindemittels zu einem formbaren und aushärtbaren Basismaterial-Bindemittel-Gemisches,
(b) Einbringen des Basismaterial-Bindemittel-Gemisches zwischen Pressflächen einer Pressvorrichtung, wobei wenigstens eine der Pressflächen eine formgebende dreidimensionale Oberflächenkontur aufweist,
(c) Pressen des Basismaterial-Bindemittel-Gemisches.

Durch diese erfindungsgemäßen Maßnahmen ist es den Erfindern nicht nur gelungen, ein einfacher herstellbares Paneel bereit zu stellen, sondern es konnte auch noch zusätzlich der Effekt erzielt werden, dass sich ein solches Paneel positiv auf das Raumklima auswirkt. Durch die dreidimensionale Oberfläche werden die Schalldiffusion und damit das Klangbild positiv beeinflusst, zudem kann die Lichtreflexion verbessert werden.

Dementsprechend betrifft die Erfindung in einem Aspekt ein akustisches Paneel, umfassend eine Oberfläche mit - vorzugsweise einer Vielzahl an - Erhebungen und Vertiefungen zur Absorption und Diffusion von Schallwellen, die auf die Oberfläche treffen, wobei die Erhebungen und Vertiefungen konkave und/oder konvexe Krümmungen aufweisen, wobei das Paneel zumindest an der Oberfläche ein ausgehärtetes Bindemittel und ein darin verteiltes partikelförmiges Füllmaterial aufweist, welches dadurch gekennzeichnet ist, dass das Füllmaterial biogenen Ursprungs ist.

Unter biogenen Ursprungs ist dabei zu vorstehe, dass das Füllmaterial biologischen oder organischen Ursprungs ist bzw. durch Leben oder Lebewesen entstanden ist. Besonders bevorzugt sind Füllmaterialien wie Hanf, Holz oder Mischungen daraus, da diese Materialien besonders positiv für das Raumklima sind. Hanf kann bevorzugt in Form von Hanfschäben vorliegen. Holz liegt bevorzugt sortenrein vor. Bevorzugt liegt das Holz in Spanform.

Die Erhebungen und Vertiefungen weisen bevorzugt geometrisch asymmetrische konkave und/oder konvexe Krümmungen auf. In einer Ausführungsvariante ist vorgesehen, dass das Paneel über die gesamte Dicke sowie an der Oberfläche aus einem ausgehärteten Bindemittel und ein darin verteiltes partikelförmiges Füllmaterial besteht.

Bevorzugt ist vorgesehen, dass eine solches Paneel derart ausgebildet ist, dass es einen Schallabsorptionsgrad α_{w} nach DIN EN ISO 11654 von mindestens 0,4 - vorzugsweise von mindestens 0,7 - aufweist. Biogene Füllmaterialen haben sich überraschenderweise als vorteilhaft erwiesen, indem sie einen sehr hohen Schallabsorptionsgrad aufweisen.

In einer Ausführungsvariante ist vorgesehen, dass an der Sichtseite des Paneels Beschichtungen aus Naturfasern, Naturblätter, Naturfließe oder eine Mischung davon aufgebracht sind. Diese Beschichtungen haben nicht nur dekorative Funktion sondern dienen auch der Verbesserung der akustischen Wirksamkeit. Als Naturfasern kommen beispielsweise Wiesenheu, Flechtenmoos, Kakaoschalen oder dgl. in Frage. Als Naturblätter können z.B. Birkenblätter, Pestwurzblätter, Kürbisblätter oder dgl. eingesetzt werden. Naturfließe können z.B. Schafwolle sein.

Die dreidimensionalen Oberflächenstrukturen zur Absorption und Diffusion von Schallwellen in Form von Erhebungen und Vertiefungen können beispielsweise als harmonisch fließende Wellenformen, in streng geometrischer Gestaltung in Kuppel-, Streifen- oder Waffelform oder auch als unregelmäßige Anordnung mit oder ohne Wiederholung ausgeführt sein, um optische und gestalterische Effekte zu erzielen.

In einer Ausführungsvariante ist vorgesehen, dass das Füllmaterial eine Rohdichte von unter 400 kg/m³, vorzugsweise von unter 350 kg/m³ aufweist. Dies führt zu einem besonders hohem Schallabsorptionsgrad.

In einer Ausführungsvariante ist vorgesehen, dass das Füllmaterial eine Länge von 5 bis 30 mm, vorzugsweise von 10 bis 20 mm, aufweist. In einer besonders bevorzugten Ausführungsvariante ist vorgesehen, dass das Füllmaterial eine Länge von 10 bis 45 mm, vorzugsweise von 10 bis 20 mm, aufweist. Auch diese Maßnahme erhöht die Fähigkeit des Paneels den auftreffenden Schall zu absorbieren.

Bevorzugt ist vorgesehen, dass das Füllmaterial biogenen Ursprungs Naturfasern aus Hanf, Stroh, Flachs, Kenaf, Kokos, Brennnesseln, Bambus, Wolle, Zellulose, Jute, Schilf, Baumwolle, Holzfasern, natürliche Polymeren oder Mischungen daraus umfasst.

Weiters kann vorgesehen sein, dass das Bindemittel ausgewählt ist aus der Gruppe Wasserglas, Emulsion-Polymer-Isocyanat, Formaldehydharz, Acrylat- und Styrolacrylatdispersion auf Wasserbasis, Methylzellulose, Leinöl, Glutinleim, Kaseinleim, Stärkeleim, Puzzolan, Casein, Kalkcasein, Epoxid- und Polyesterharz, Isocyanat, Polyurethan, PVAc Leim, UF, W-Leim, HF Leim und Phenolleim oder Kombinationen daraus. Bevorzugt sind Bindemittel biogenen Ursprungs. Besonders bevorzugt ausgewählt aus der Gruppe Methylzellulose, Leinöl, Glutinleim, Kaseinleim, Stärkeleim, Puzzolan, Casein, Kalkcasein. Besonders bevorzugt ist vorgesehen, dass das Bindemittel ausgewählt ist aus der Gruppe PVAc Leim, UF, W-Leim und HF Leim oder Kombinationen daraus.

In einer Ausführungsvariante der Erfindung kann vorgesehen sein, dass das Bindemittel ein hydraulisches Bindemittel wie Zement, Gips, Magnesiabinder oder Kalk umfasst.

Besonders bevorzugt ist vorgesehen, dass die Oberfläche zumindest bereichsweise gekrümmt ist, vorzugsweise zylinderartig und/oder kuppelartig.

Das hergestellt Paneel kann bevorzugt porös ausgeführt werden. Diese Porosität wird im Wesentlichen vom Verhältnis Partikelanteil zu Bindemittelanteil, der Qualität der verwendeten Partikel, dem verwendeten Bindemittel und der Kompression beim Verdichtungsvorgang bestimmt. In einer Ausführungsvariante ist vorgesehen, dass das Paneel gekennzeichnet ist durch eine Rohdichte von 400 kg/m³, vorzugsweise unter 350 kg/m³.

Die Rohdichte, scheinbare, geometrische Dichte oder Raumgewicht genannt, ist die Dichte eines porösen Festkörpers basierend auf dem Volumen einschließlich der Porenräume. Das

Gegenstück zur Rohdichte ist die Reindichte. Reindichte und Rohdichte unporöser Körper sind gleich. Der Quotient aus Roh- und Reindichte ist die Porosität (die relative Dichte).

In einem Aspekt der Erfindung kann vorgesehen sein, dass an der der Oberfläche abgewandten Seite eine korrelierende Struktur zu den Vertiefungen und Erhebungen vorgesehen ist, sodass die Dicke der Platte trotz der unterschiedlichen Erhebungen und Vertiefungen im Wesentlichen konstant ist.

Bevorzugt ist vorgesehen, dass der Gesamthöhenunterschied zwischen Erhebungen und Vertiefungen mindestens 20 mm vorzugsweise mindestens 40 mm beträgt.

Die Oberflächenstruktur kann Erhebungen und Vertiefungen aufweisen, deren Gesamthöherunterschied nur wenige Millimeter beträgt, zum Beispiel bei einem Deckenpaneel mit Wellenrelief, das unauffällig in einem Büro zum Einsatz kommen kann. Der Gesamthöhenunterschied kann bei eher großformatigen Platten aus gestalterischen Gründen auch 100 mm oder mehr betragen z.B. als Wandverkleidung in einer Rezeption. Zudem können beispielsweise auch trog- oder wannenförmige Platten auch mit organisch fließenden Formen mit einer Höhe von 400 mm gestaltet werden, die einzeln oder auch in Gruppen an der Wand oder Decke, aber auch freistehend eingesetzt werden können. Bei einem freistehenden oder freihängenden Einsatz können auch beide Seiten als Sichtseiten ausgeführt und dementsprechend gestaltet werden. Es können auch zwei Platten mit Ihren Rückseiten aneinander montiert werden.

Die reliefartige Oberflächenstruktur hat folgende Effekte:
- unterschiedliche Absorberstärken und dadurch auch unterschiedliche Frequenzbereiche, in denen der Absorber gut wirkt.
- Vergrößerung der Oberfläche und dadurch eine höheres Schallabsorptionsvermögen.
- "Diffusierung" des Schalls: Ein Anteil der auf den Absorber auftretenden Schallenergie wird wieder in den Raum zurück reflektiert.

Der reflektierte Anteil wird an der reliefartigen Oberfläche gebrochen und in unterschiedliche Richtungen zurück reflektiert.

Die Wahl der Dicke des Paneels wird überwiegend von statisch konstruktiven und gestalterischen Parametern bestimmt, aber auch vom Kosten- Nutzenverhältnis und auch vom Wärmeleitkoeffizient. Die erfindungsgemäßen Platten können einen Wärmeleitkoeffizient von unter 0,06 W/mK aufweisen.

Um den akustischen Wirkungsgrad des erfindungsgemäßen Paneels zu erhöhen, kann dieses mit einem vorzugsweise akustisch wirksamen Vlies an der Rückseite ausgestattet sein. Dieses Vlies kann bereits im Herstellvorgang miteingebracht oder nachträglich aufgeklebt werden. Es kann auch aus natürlichen biogenen Fasern bestehen.

Bevorzugt weist das Paneel eine zweifach gekrümmte, insbesondere zylinder- und/oder kuppelartig gekrümmte und/oder gewölbte und/oder freie Gestalt aufweisende Grundform auf (beispielsweise eine Platte oder Schale), wobei ein im Wesentlichen feuchte Konsistenz aufweisendes aushärtbares Gemisches aus zumindest einem Bindemittel mit partikelartigen Bestandteilen auf eine der jeweiligen Gestalt entsprechend ausgebildete Negativform aus einem zumindest von dem genannten Rohmaterial im Wesentlichen nicht durchdringbaren Material aufgebracht und dort aushärten gelassen wird, wobei das Paneel in einem mit konkaven und/oder konvexen Erhebungen und Vertiefungen mit unterschiedlichen Radien und Höhen ausgeführten Formnegativ gepresst wird, wobei das eingesetzte Füllmaterial überwiegend aus biogenen Partikeln besteht.

In einer bevorzugten Ausführungsvariante ist vorgesehen, dass das Füllmaterial ausschließlich aus Materialien biogenen Ursprungs besteht. Bevorzugt sind Hanfschäben und/oder Holzspäne als Bestandteile zu nennen.

In einer Ausführungsvariante kann vorgesehen sein, dass die fertige Platte nach DIN EN 13432 zu 100% biologisch abbaubar ist. Dies kann z.B. erreicht werden, indem das gesamte Paneel aus Materialien biogenen Ursprungs besteht. Daher ist ein einer Ausführungsvariante vorgesehen, dass das Paneel im Wesentlichen ausschließlich Materialien aufweist, die nach DIN EN 13432 biologisch abbaubar sind.

Die Oberflächenstruktur des Paneels ist vorzugsweise derart ausgestaltet, dass die Schalldiffusion und/oder Lichtreflexion verbessert wird. Diese Strukturen können als in sich geschlossene Form unabhängig von einer Nachbarplatte auch alleinstehend ausgeführt sein, oder aber mit Rapport an das Muster der vier Nachbarplatten anschließend ausgeführt sein. Dazu kann beispielsweise der linke Rand der Platte so ausgeführt sein, dass der rechte Rand ohne Unterschied in Orientierung und Höhe in eine Nachbarplatte übergehen kann, die die gleiche Form aufweist.

In einer Ausführungsvariante kann vorgesehen sein, dass die Oberflächenstruktur der Platte fließende Anschlussmöglichkeiten zu den Nachbarplatten in alle 4 Richtungen erlaubt (Rapport).

In einer Ausführungsvariante kann vorgesehen sein, dass im Inneren des Paneels zumindest bereichsweise elektrische Leitungen, hydraulische Leitungen, Datenleitungen, Rohre, Schläuche, Leerrohre, Aussparungselemente vorgesehen sind.

In einer bevorzugten Ausführungsvariante ist vorgesehen, dass Verstärkungselemente, Versteifungselemente (beispielsweise MDF Platten oder andere Trägerplatten) oder Kombinationen daraus angeordnet sind. Dabei kann vorgesehen sein, dass die Verstärkungselemente oder Versteifungselemente aus der Gruppe Bänder, Drähte, Seile, Verbindungselemente, Kraftaufnahmeelemente oder Dämmelemente ausgewählt sind.

Hinsichtlich des Verfahrens zur Herstellung kann also vorgesehen sein, dass ein Bindemittel und ein partikülärer Füllstoff biogenen Ursprungs vermischt und zwischen die Pressflächen eingebracht wird. Die Pressflächen weisen zur Ausbildung der akustisch wirksamen eine Negativform mit konkaven und/oder konvexen Erhebungen und Vertiefungen mit unterschiedlichen Radien und Höhen zur Übertragung entsprechender Strukturen auf. Das Gemisch wird gepresst und das Bindemittel ausgehärtet.

Gemäß einer Ausführungsform der Erfindung weist die Negativform mindestens zwei konkave und/oder konvexe Erhebungen und Vertiefungen mit unterschiedlichen Radien und Höhen auf. Die Erhebungen und Vertiefungen können einen Gesamthöhenunterschied von mindestens 10 mm, aber auch von mindestens 200 mm aufweisen.

Zur Verbesserung der Schallabsorption kann weiters vorgesehen sein, dass das Paneel ein Vlies aufweist, welches an der der Oberfläche abgewandten Seite des Paneels angeordnet ist.

Weiterhin wird durch die Erfindung ein insbesondere durch das erfindungsgemäße Verfahren hergestelltes Paneel bereitgestellt, das aus einem Gemisch zumindest eines

Bindemittels mit einem Füllmaterial mit partikelartigen Bestandteilen hergestellt ist, wobei das Füllmaterial überwiegend oder vollständig aus biogenen Partikeln besteht. Das Paneel weist zumindest an einer Oberfläche eine Struktur mit konkaven und/oder konvexen Erhebungen und Vertiefungen mit unterschiedlichen Radien und Höhen auf, die durch die bei der Herstellung verwendete Negativform bestimmt ist. Das Paneel kann beispielsweise die Form einer zweifach gekrümmten, insbesondere zylinder- und/oder kuppelartig gekrümmte und/oder gewölbte und/oder freie Gestalt Platte oder Schale aufweisen. Zusätzlich kann die Gestaltung und Anordnung dieser Krümmungen in unterschiedlichen Ebene und Größenordnung erfolgen, die auch miteinander korrelieren können. Die Abmessung der Erhebungen und Vertiefungen haben einen Einfluss auf die Reflexion des Schalls. Flächen, deren Abmessung vergleichbar mit der Wellenlänge (frequenzabhängig) ist, tragen zu der diffusen Schallreflexion bei. Je tiefer die Frequenz, desto größer muss auch die Tiefe/Breite des Reliefs sein. Im wichtigsten Frequenzbereich der Sprache (500 bis 1000 Hz) beträgt die optimale Breite der konvexen und konkaven Krümmungen 0,5 bis 1,0 m und die Tiefe 0,1 bis 0,5 m.

Für eine gute Schalldiffusion, innerhalb des Frequenzbereiches 500 - 100Hz, kann beispielhaft eine Krümmung des gesamten Paneels mit 50 cm Radius (bis zu 100 cm) und einer Amplitude von 10 bis 50 cm, beispielhaft von 20 cm vorteilhaft sein, während zugleich eine niedrige Struktur mit "Mikrowaben" an der Oberfläche des gekrümmten Paneels mit beispielsweise 0,01 m Höhe für gute Schallabsorption und eine verlaufende Wellenform mit bis zu 0,05 m Höhe optische und designtechnische Ansprüche erfüllt.

Zur einfachen und kostengünstigen Herstellung der erfindungsgemäßen Platten mit einer dreidimensionalen Oberflächenstruktur wird ein Basismaterial - Bindemittel - Gemisch verwendet, das in einer Pressvorrichtung mit der Form, in der die drei dimensionale Oberflächenstruktur definiert wird, zu einem Paneel in Plattenform (nachfolgend auch nur "Platte" genannt) gepresst.

Für die Herstellung kann eine Membranvakuumpresse, eine Rollenpresse oder auch eine hydraulische Pressvorrichtung verwendet werden. Die Pressflächen können beheizbar ausgeführt sein, um die Taktzeit zu verkürzen. Der Pressdruck ist je nach Materialrezeptur unterschiedlich und kann insbesondere bei 1-3 bar liegen, aber auch deutlich höher bei 20 bar liegen. Der Pressdruck wird je nach Anforderung an die Platte (z.B. Schallabsorptionsvermögen, Biegezugfestigkeit, Druckfestigkeit, Wärmeleitfestigkeit und andere technische Parameter) definiert und bestimmt maßgeblich die Porosität der Platte, die für das Schallabsorptionsvermögen ausschlaggebend ist.

Mindestens eine der Pressflächen ist mit einer formgebenden dreidimensionalen Struktur ausgestattet, wobei diese Struktur als Negativform der gewünschten Platte ausgestaltet ist. Beispielsweise kann diese Negativform harmonisch verlaufende Wellen oder auch ein streng geometrisch angeordnetes Waffelraster aufweisen. Diese Strukturen können als in sich geschlossene Form unabhängig von einer Nachbarplatte auch alleinstehend ausgeführt sein, oder aber mit Rapport an das Muster der vier Nachbarplatten anschließend ausgeführt sein. Dazu kann beispielsweise der linke Rand der Platte so ausgeführt sein, dass der rechte Rand ohne Unterschied in Orientierung und Höhe in eine Nachbarplatte übergehen kann, die die gleiche Form aufweist.

Das Bindemittel kann vor dem Pressvorgang beispielsweise gesprüht, getropft oder anders beigemengt werden. Die Vermischung der Rohmaterialien kann vorzugsweise in einem Trommelmischer, aber auch mit herkömmlichen Rühr und Mischvorrichtungen und auch manuell mit einem elektrischen Rührwerk erfolgen.

Die Negativform kann mit einem Trennmittel oder mit einer Antihaftbeschichtung ausgestattet werden, um ein leichtes Entformen der Platte zu ermöglichen.

Die Oberflächenstruktur des Paneels ist vorzugsweise derart ausgestaltet, dass die Schalldiffusion und/oder Lichtreflexion verbessert wird. Beispielsweise kann diese Negativform harmonisch verlaufende Wellen oder auch ein streng geometrisch angeordnetes Waffelraster aufweisen. Diese Strukturen können als in sich geschlossene Form unabhängig von einer Nachbarplatte auch alleinstehend ausgeführt sein, oder aber mit Rapport an das Muster der vier Nachbarplatten anschließend ausgeführt sein. Dazu kann beispielsweise der linke Rand der Platte so ausgeführt sein, dass der rechte Rand ohne Unterschied in Orientierung und Höhe in eine Nachbarplatte übergehen kann, die die gleiche Form aufweist.

Für die Füllung der Negativform oder des Produktionsbands können auch Partikel und Fasern unterschiedlicher Herkunft, Größe und Aufbereitungsart verwendet werden, um das akustische Absorptionsvermögen zu verbessern oder die mechanische Festigkeit der Platten an bestimmten Stellen zu erhöhen. In eine Negativform mit ausgeprägten Wellen können beispielsweise zuerst gemahlene Hanfschäben mit bis zu 10mm Länge, anschließend gehacktes weiches Fichtenholz mit bis zu 15mm und anschließend gehäckseltes Weizenstroh mit 300mm Länge eingebracht werden.

Weiterhin kann das Basismaterial - Bindemittel - Gemisch auch in einem Vakuumtisch oder Vakuumsack hergestellt werden, wobei im absoluten Druck von maximal 700mbar, insbesondere maximal 400mbar, das Gemisch evakuiert und dadurch gepresst wird, während die Mischung aushärtet. Bei vollständiger Evakuierung wird je nach Materialfeuchte und Temperatur ein absoluter Druck von 0 - 50 mbar erreicht. Je nach Füllmateriale wird auch auf etwa 50 - 400 mbar absolut evakuiert, da in diesem Verfahren über den angelegten absoluten Druck die Rohdichte und damit auch die akustische Wirksamkeit der dreidimensionalen Platte mitbestimmt werden kann. Hierzu bedarf es insbesondere auch keiner formgebenden Form, da eine optisch gestaltende dreidimensionale Struktur über das Zusammenziehen des Vakuumsackes erreicht werde kann.

Als Bindemittel werden unter anderem eingesetzt: Solche auf Basis von Wassergläsern, Emulsion Polymer Isocyanat, formaldehyd Harze (Melamin, Harnstoffe...), Acrylat- and Styrolacrylatdispersionen auf Wasserbasis, Methylzellulose, Leinöl, Glutin-, Kasein-, Stärkeleime, Puzzolane, Casein, Kalkcasein, Epoxid- und Polyesterharzen, Isocyanat, Polyurethan und herkömmliche Polymerverbindungen wie z.B. PVAc Leime, UF, W-Leime und HF Leime. Allerdings können auch alle hydraulischen Bindemittel wie Zement, Gips, Magnesiabinder oder Kalk eingesetzt werden. Auch Mischungen aus zwei oder mehreren der genannten Komponenten sind möglich.

Die Wahl des Bindemittels beeinflusst maßgeblich die Wasserbeständigkeit sowie die mechanischen und schallakustischen Eigenschaften des Produkts.

Folgende Partikel, Fasern und Schäben können beispielhaft als Füllstoff eingesetzt werden: Solche aus Hanf, Stroh, Flachs, Kenaf, Kokos, Brennnesseln, Bambus, Wolle, Zellulose, Jute, Schilf, Baumwolle oder Hartfasern wie Holz aus verschiedenen Arten und andere natürliche Polymere. Es können zusätzlich gegebenenfalls auch Kunstfasern z.B. Glaswolle, Kevlar, Glasfaser und andere Chemiefasern oder synthetische Polymere bzw. eine Kombination aus Naturfasern und Kunstfasern wie z.B. Textilien verwendet werden. Die zur Anwendung kommenden Fasern können verschiedene mechanische, chemische biologische und witterungsbedingte Bearbeitungsschritte durchlaufen, um optimal aufbereitet zu sein - diese sind: Schneiden, Mahlen, Häckseln, Quetschen, Kartieren, Laugen, Aufspleißen, Auffasern, Dampfaufschluss, Ultraschall, Trocknen und Befeuchten.

Des Weiteren können die Fasern, je nach benötigten Anforderungen, auf verschiedene Längen gebracht werden, z.B. durch Hacken, Reiben, Fräsen, Aussieben.

Einsehbar ist auch eine Kombination aus zwei oder mehreren Faserstoffen mit verschiedenen Längen, sowie auch die Beimengung von Pflanzenmaterial, das an sich keine guten Fasereigenschaften besitzt, aber dafür die Qualität des Produktes, z.B. hinsichtlich Schädlingsresistenz, erhöht. Dies kann z.B. durch die Beimengung von Rainfarn erfolgen. Des Weiteren können verschiedenste Zuschlagsstoffe wie z.B. Ammoniumsalz, Soda und Kieselsäure beigemengt werden, um z.B. dessen Brandfestigkeit zu erhöhen oder Beeinträchtigungen durch Schädlinge vorzubeugen. Zudem können die hergestellten Platten auch nachträglich besprüht, bemalt, gerollt, getaucht, bestrahlt, getränkt oder auf eine andere Art und Weise behandelt werden, um die Eigenschaften zu verändern.

Was die Eigenschaften des neuen Verbundmaterials betrifft, so ist hierzu folgendes auszuführen: Bei der Verwendung von Hanfschäben mit Wasserglas ergibt sich beispielsweise eine Dichte der fertigen Platte von ca. 0,4 t/m³, bei einer Verdichtung im Vakuum von absolut 100mbar und einer Mischungsverhältnis Bindemittel (Festkörpergehalt) zu den Hanfschäben von 0,4 : 1 Teilen. Durch die gezielt erreichte Dichte der Faserplatten ergibt sich ein guter Strömungswiderstand, der wiederum die Schallabsorptionsfähigkeit bestimmt. Je nach Kompression lassen sich unterschiedlich dichte Platten herstellen.

Die hergestellt Platte kann bevorzugt porös ausgeführt werden. Diese Porosität wird im Wesentlichen vom Verhältnis Partikelanteil zu Bindemittelanteil, der Qualität der verwendeten Partikel, dem verwendeten Bindemittel und der Kompression beim Verdichtungsvorgang bestimmt.

Vorteile und Details erfindungsgemäßer Paneele werden nun anhand von Figuren und der entsprechenden Figurenbeschreibungen erörtert.
Fig. 1 zeigt den Querschnitt eines akustischen Paneels als abgehängtes Deckenelements.
Fig. 2 zeigt den Querschnitt eines akustischen Paneels anhand eines senkrechten Wandaufbaus.
Fig. 3 zeigt das das alleinstehende akustische Paneel in einer Kombination mit einer Trägerplatte.

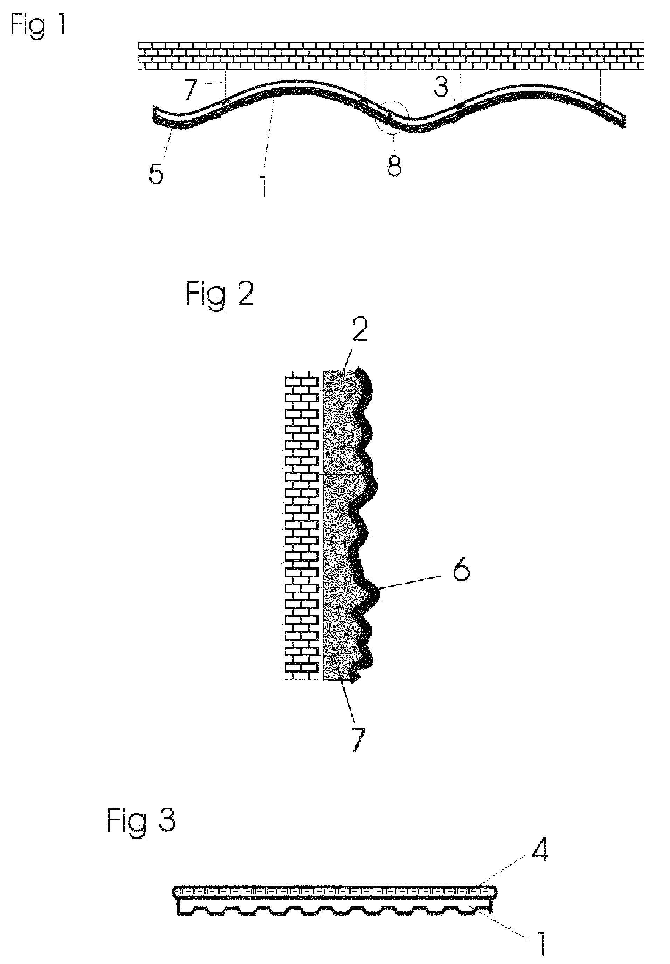

Fig. 1 zeigt zwei akustische Paneele 1 mit je einer Oberfläche 5 mit Erhebungen und Vertiefungen. Die Erhebungen und Vertiefungen weisen konkave und konvexe Krümmungen auf. Im Bereich der Oberfläche 5 sind ein ausgehärtetes Bindemittel und ein darin verteiltes partikelförmiges Füllmaterial vorgesehen. Das Füllmaterial ist biogenen Ursprungs.

Über Bänder, Drähte, Seile 7 oder dgl. ist das Paneel 1 an einer Decke befestigt. Dazu sind Kraftaufnahmeelemente 3 vorgesehen, welche die Bänder, Drähte, Seile 7 oder dgl. aufnehmen. Die beiden Paneele 1 sind mit Verbindungselemente 8 miteinander verbunden. Die Oberflächenstruktur der Paneele 1 ist derart ausgebildet, dass der Anschluss zu einem weiteren Paneel fließend ist (Rapport), sodass eine Anordnung aus Paneelen möglich ist - wie abgebildet.

Fig. 2 zeigt ein akustisches Paneel 1 mit Erhebungen und Vertiefungen an der Oberfläche 5. Die Rückseite weist eine Struktur 6 auf die mit des Erhebungen und Vertiefungen korrespondiert, sodass das Paneel über die gesamte Fläche eine im Wesentlichen konstante Dicke aufweist. Zusätzlich ist ein Dämmelement in Form eines Vlieses 2 vorgesehen. Das Paneel ist über Bänder, Drähte, Seile 7 oder dgl. an einer Wand befestigt.

Fig. 3 zeigt ein weiteres Ausführungsbeispiel eines akustischen Paneels 1 mit Erhebungen und Vertiefungen an der Oberfläche, wobei an der Rückseite zusätzlich ein Verstärkungs- oder Verstreifungselement vorgesehen ist.

Die Fig. 1 bis 3 zeigen schrittweise Aufbauten und können strukturell hinsichtlich des Paneels und der Anordnung auch untereinander kombiniert werden.

### Bezugszeichenliste:

- 1: Akustisches Paneel
- 2: Vlies / Dämmelement
- 3: Kraftaufnahmeelement
- 4: Verstärkungs- / Versteifungselement
- 5: Oberfläche mit Mischungen des Füllmaterials
- 6: Rückseite mit korrelierender Struktur
- 7: Bänder / Drähte / Seile
- 8: Verbindungselemente

Nachfolgend sind in der Tabelle Beispiele für Materialien erfindungsgemäßer Paneele genannt:

| Partikel/ Faser | Partikelgröße/ Faserlänge mm | Bindemittel | Verhältnis [Gew-%] |
|---|---|---|---|
| | | | Partikel/ Bindemittel |
| Hanfschäben | 0 - 80 | W Leim | 90/10 |
| Fichtenhack | 20 - 50 | UF Leim | 86/14 |
| Fichtenhack | 3 - 10 | Acronal | 90/10 |
| Flachs | 15 - 40 | 1k PUR | 94/06 |
| Fichtenholz | 20 - 50 | PVAc | 65/35 |
| Glasfasern | 20 - 30 | Polyesterharz | 50/50 |
| Kohlefasern | 20 - 30 | Epoxydharz | 50/50 |
| Jute | 0 - 50 | Stärke | 55/45 |
| Kiefernholz | 5 - 50 | Zement | 40/60 |
| Fasernessel | 10 - 50 | Methylzelluloseester | 40/60 |
| Roggenstroh | 30 - 80 | 2k EPI | 70/30 |
| Zellulose | 10 - 70 | Dextrin | 50/50 |
| Schafwolle | 30 - 60 | Casein-Leim | 35/65 |

## Patentansprüche

1. Akustisches Paneel (1), umfassend eine Oberfläche (5) mit Erhebungen und Vertiefungen zur Absorption und Diffusion von Schallwellen, die auf die Oberfläche (5) treffen, wobei die Erhebungen und Vertiefungen konkave und/oder konvexe Krümmungen aufweisen, wobei das Paneel (1) zumindest an der Oberfläche (5) ein ausgehärtetes Bindemittel und ein darin verteiltes partikelförmiges Füllmaterial aufweist, **dadurch gekennzeichnet, dass** das Füllmaterial biogenen Ursprungs ist.

2. Paneel nach Anspruch 1, **dadurch gekennzeichnet, dass** das Füllmaterial Hanf, Holz oder Mischungen daraus umfasst.

3. Paneel nach Anspruch 1 oder Anspruch 2, **dadurch gekennzeichnet, dass** an der Sichtseite des Paneels (1) Beschichtungen aus Naturfasern, Naturblätter, Naturfließe oder eine Mischung davon aufgebracht sind.

4. Paneel nach einem der Ansprüche 1 bis 3, **dadurch gekennzeichnet, dass** das Füllmaterial eine Länge von 10 bis 45 mm, vorzugsweise von 10 bis 20 mm, aufweist.

5. Paneel nach einem der Ansprüche 1 bis 4, **dadurch gekennzeichnet, dass** das Bindemittel ausgewählt ist aus der Gruppe Wasserglas, Emulsion-Polymer-Isocyanat, Formaldehydharz, Acrylat- und Styrolacrylatdispersion auf Wasserbasis, Methylzellulose, Leinöl, Glutinleim, Kaseinleim, Stärkeleim, Puzzolan, Casein, Kalkcasein, Epoxid- und Polyesterharz, Isocyanat, Polyurethan, PVAc Leim, UF, W-Leim und HF Leim oder Kombinationen daraus.

6. Paneel nach einem der Ansprüche 1 bis 5, **dadurch gekennzeichnet, dass** das Bindemittel ein hydraulisches Bindemittel wie Zement, Gips, Magnesiabinder oder Kalk umfasst.

7. Paneel nach einem der Ansprüche 1 bis 6, **gekennzeichnet durch** Kraftaufnahmeelemente (3) zur Verankerung des Paneels (1).

8. Paneel nach einem der Ansprüche 1 bis 7, **dadurch gekennzeichnet, dass** an der Oberfläche (5) abgewandten Seite eine korrelierende Struktur (6) zu den Vertiefungen und Erhebungen vorgesehen ist, sodass die Dicke des Paneels (1) trotz der unterschiedlichen Erhebungen und Vertiefungen über seine Fläche im Wesentlichen konstant ist.

9. Paneel nach einem der Ansprüche 1 bis 8, **dadurch gekennzeichnet, dass** der Gesamthöhenunterschied zwischen Erhebungen und Vertiefungen mindestens 10 mm vorzugsweise mindestens 20 mm beträgt.

10. Paneel nach einem der Ansprüche 1 bis 9, **dadurch gekennzeichnet, dass** es derart ausgebildet ist, dass es einen Schallabsorptionsgrad a_{w} nach DIN EN ISO 11654 von mindestens 0,4 - vorzugsweise von mindestens 0,7 - aufweist.

11. Paneel nach einem der Ansprüche 1 bis 10, **gekennzeichnet durch** ein Dämmelement (2), vorzugsweise Vlies, welches an der der Oberfläche (5) abgewandten Seite des Paneels (6) angeordnet ist.

12. Paneel nach einem der Ansprüche 1 bis 11, **dadurch gekennzeichnet, dass** im Inneren des Paneels zumindest bereichsweise Verstärkungselemente, Versteifungselemente oder Kombinationen daraus angeordnet sind.

13. Anordnung, umfassend mindestens zwei aneinander angrenzende Paneele (1) nach einem der Ansprüche 1 bis 12.

14. Anordnung nach Anspruch 13, **dadurch gekennzeichnet, dass** die Oberflächenstruktur der Paneele (1) derart ausgebildet ist, dass der Anschluss zu einem weiteren Paneel fließend ist (Rapport).

15. Verfahren zur Herstellung eines akustischen Paneels nach einem der Ansprüche 1 bis 12, umfassend die Schritte
(a) Bereitstellen und Vermischen eines partikelartigen, überwiegend biogenen Füllstoffs sowie eines Bindemittels zu einem formbaren und aushärtbaren Basismaterial-Bindemittel-Gemisches,
(b) Einbringen des Basismaterial-Bindemittel-Gemisches zwischen Pressflächen einer Pressvorrichtung, wobei wenigstens eine der Pressflächen eine formgebende dreidimensionale Oberflächenkontur aufweist,
(c) Pressen des Basismaterial-Bindemittel-Gemisches.
